# EUROPEAN PATENT APPLICATION

(11) **EP 4 843 946 A1**
(43) Date of publication of application: **25.11.2026**
(21) Application number: 25305720.2
(22) Date of filing: 20.05.2025
(51) Int. Cl.: C01B 3/50

(54) **DECARBONIZING HYDROCARBON GAS PRODUCTION**

(71) Applicant: Technip Energies France, 92741 Nanterre Cedex (FR)
(72) Inventor: MAENHAUT, Marieke, 92741 Nanterre Cedex (FR); SELLINI, Marc, 92741 Nanterre Cedex (FR); MASOOD, Simran, 92741 Nanterre Cedex (FR)
(74) Representative: Edson, Russell Gregory

(57) **Abstract**

Techniques for decarbonizing a hydrocarbon (e.g., synthesis) gas stream are disclosed. The hydrocarbon gas stream may result from a reforming reaction of a hydrocarbon feedstock at a hydrocarbon gas generation system. A partially decarbonized hydrocarbon gas stream from an upstream first carbon dioxide removal unit associated with the hydrocarbon gas generation system can be treated in a purification unit to produce a purified hydrocarbon gas stream and an off-gas stream. The off-gas stream can be treated at a downstream off-gas treatment unit to produce a treated off-gas stream. Treating the off-gas stream can comprise converting carbon monoxide in the off-gas stream to carbon dioxide via a shift reaction, and subsequently removing carbon dioxide from the off-gas stream using a second carbon dioxide removal unit. The treated off-gas stream can be used as a fuel gas by one or more heated reactors of the hydrocarbon gas generation system.

## Description

### Technical Field

The present disclosure relates generally to producing hydrocarbon gas such as synthesis gas, and more particularly although not necessarily exclusively, to decarbonizing a process of producing hydrocarbon gas from a hydrocarbon feedstock.

### Background

Hydrocarbon gases such as synthesis gases can be produced from a hydrocarbon feedstock such as, for example, natural gas, liquefied petroleum gas, biogas, naphtha or a carbon-rich off-gas. Hydrocarbon gases can be produced, for example, by a steam methane reforming (SMR) process, an autothermal reforming (ATR) process, or a partial oxidation (Pox) process. Hydrocarbon gases can be converted to other chemical products such as ammonia, methanol, hydrogen, olefins, diesel, and gasoline. Such chemical products can have many uses. For example, ammonia can be used as an agricultural fertilizer, in cleaning products, to purify water, as a refrigerant gas, and in the manufacture of numerous other products such as plastics, explosives, and other chemicals. Carbon dioxide may be produced as a byproduct of hydrocarbon gas production, such as by combustion of a carbon-based fuel for heating the hydrocarbon feedstock to the temperatures needed to carry out a reforming reaction. It is desirable to reduce carbon dioxide emissions associated with producing hydrocarbon gases.

### Summary

As used below, any reference to a series of examples is to be understood as a reference to each of those examples disjunctively (e.g., "Examples 1-4" or "Examples 1 to 4" is to be understood as "Examples 1, 2, 3, or 4").

As used below, any reference to a series of examples is to be understood as a reference to each of those examples disjunctively (e.g., "Example Nos. 1-4" or "Example No. 1 to Example No. 4" is to be understood as "Examples 1, 2, 3, or 4").

Example No. 1 is a method including producing a purified hydrocarbon gas stream and an off-gas stream by purifying a partially decarbonized hydrocarbon gas stream received from an upstream first carbon dioxide removal unit. The method also includes treating the off-gas stream at a downstream off-gas treatment unit to produce a treated off-gas stream, where treating the off-gas stream by the off-gas treatment unit comprises converting carbon monoxide in the off-gas stream to carbon dioxide via a shift reaction, and subsequently removing carbon dioxide from the off-gas stream using a second carbon dioxide removal unit. The method additionally includes using the treated off-gas stream as a fuel gas for one or more heated reactors, furnaces, or heaters located upstream of the first carbon dioxide removal unit.

Example No. 2 is Example No. 1, wherein the hydrocarbon gas stream is a synthesis gas stream including carbon monoxide, carbon dioxide, and hydrogen and is generated by a reforming reaction of a hydrocarbon in the one or more heated reactors or furnaces.

Example No. 3 is Example No. 1 or Example No. 2, wherein the second carbon dioxide removal unit removes carbon dioxide from the off-gas stream through at least one of solvent-based absorption, cryogenic separation, membrane separation, and pressure swing adsorption.

Example No. 4 is any of Example Nos. 1-3, wherein the second carbon dioxide removal unit: receives solvent from a solvent regeneration system associated with the first carbon dioxide removal unit and uses the solvent to remove carbon dioxide from the off-gas stream; and returns used solvent to the solvent regeneration system for regeneration of the solvent.

Example No. 5 is Example No. 4, wherein the solvent is amine and the carbon dioxide is removed from the off-gas stream by the second carbon dioxide removal unit by contacting the off-gas stream with the amine in an absorption column.

Example No. 6 is any of Example Nos. 1-5, wherein the off-gas treatment unit is retrofit to a hydrocarbon gas generation system having an existing primary carbon dioxide recovery system that includes the first carbon dioxide removal unit and a hydrocarbon gas purification unit that cooperates with the first carbon dioxide removal unit to produce the purified hydrocarbon gas stream and the off-gas stream.

Example No. 7 is any of Example Nos. 1-6, wherein using the treated off-gas as a fuel gas in the one or more heated reactors, furnaces, or heaters reduces carbon dioxide emissions from the one or more heated reactors, furnaces, or heaters by approximately 10% to 12% in comparison to a case where the off-gas is used as a fuel gas in the one or more heated reactors, furnaces, or heaters without first being treated at the off-gas treatment unit.

Example No. 8 is a system including a hydrocarbon gas purification unit arranged to receive a partially decarbonized hydrocarbon gas stream from an upstream first carbon dioxide removal unit and to produce a purified hydrocarbon gas stream and an off-gas stream therefrom. The system also includes an off-gas treatment unit arranged downstream of the hydrocarbon gas purification unit to receive the off-gas stream and to produce a treated off-gas stream by converting carbon monoxide in the off-gas stream to carbon dioxide using one or more shift reactors and removing carbon dioxide from the off-gas stream using a second carbon dioxide removal unit. The system additionally includes a fluid pathway between the off-gas treatment unit and one or more heated reactors, furnaces, or heaters located upstream of the first carbon dioxide removal unit by which the treated off-gas stream is suppliable as a fuel gas to the one or more heated reactors, furnaces, or heaters.

Example No. 9 is Example No. 8, wherein the hydrocarbon gas stream is a synthesis gas stream comprising carbon monoxide, carbon dioxide, and hydrogen and is generated by a reforming reaction of a hydrocarbon in the one or more heated reactors or furnaces.

Example No. 10 is Example No. 8 or Example No. 9, wherein the one or more shift reactors is a first shift reactor and a second shift reactor that are cooperatively operable to convert carbon monoxide in the off-gas stream to carbon dioxide.

Example No. 11 is any of Example Nos. 8-10, wherein the second carbon dioxide removal unit comprises at least one of a solvent-based absorption component, a cryogenic separation component, a membrane separation component, and a pressure swing adsorption component.

Example No. 12 is any of Example Nos. 8-11, wherein the first carbon dioxide removal unit and the second carbon dioxide removal unit each utilize a solvent-based carbon dioxide removal technique.

Example No. 13 is Example No. 12, wherein the second carbon dioxide removal unit is arranged to receive the solvent from a solvent regeneration system associated with the first carbon dioxide removal unit and to use the solvent to remove carbon dioxide from the off-gas stream, and return used solvent to the solvent regeneration system for regeneration of the solvent.

Example No. 14 is Example No. 13, further including a solvent pump in a solvent return pathway between the second carbon dioxide removal unit and the solvent regeneration system.

Example No. 15 is a method of retrofitting an existing hydrocarbon gas generation system having a primary carbon recovery system that includes a first carbon dioxide removal unit and a hydrocarbon gas purification unit that cooperate to produce at least an off-gas stream. The method includes installing an off-gas treatment unit downstream of the hydrocarbon gas purification unit, and treating the off-gas stream at the off-gas treatment unit to produce a treated off-gas stream, where treating the off-gas stream by the off-gas treatment unit comprises converting carbon monoxide in the off-gas stream to carbon dioxide via a shift reaction, and subsequently removing carbon dioxide from the off-gas stream using a second carbon dioxide removal unit. The method also includes using the treated off-gas stream as a fuel gas for one or more heated reactors, furnaces, or heaters of the hydrocarbon gas generation system.

Example No. 16 is Example No. 15, wherein the hydrocarbon gas stream is a synthesis gas stream comprising carbon monoxide, carbon dioxide, and hydrogen and is generated by a reforming reaction of a hydrocarbon in the one or more heated reactors or furnaces.

Example No. 17 is Example No. 15 or Example No. 16, wherein the second carbon dioxide removal unit removes carbon dioxide from the off-gas stream through at least one of a solvent-based absorption component, a cryogenic separation component, a membrane separation component, and a pressure swing adsorption component.

Example No. 18 is any of Example Nos. 15-17, wherein the second carbon dioxide removal unit receives solvent from a solvent regeneration system associated with the first carbon dioxide removal unit and uses the solvent to remove carbon dioxide from the off-gas stream, and returns used solvent to the solvent regeneration system for regeneration of the solvent.

Example No. 19 is Example No. 18, wherein the solvent is amine and the carbon dioxide is removed from the off-gas stream by the second carbon dioxide removal unit by contacting the off-gas stream with the amine in an absorption column.

Example No. 20 is any of Example Nos. 15-19, wherein using the treated off-gas as a fuel gas in the one or more heated reactors, furnaces, or heaters reduces carbon dioxide emissions from the one or more heated reactors, furnaces, or heaters by approximately 10% to 12% in comparison to a case where the off-gas is used as a fuel gas in the one or more heated reactors, furnaces, or heaters without first being treated at the off-gas treatment unit.

### Brief Description of the Drawings

FIG. 1 is a block diagram of a synthesis gas decarbonization system according to one example configuration.
FIG. 2 is a block diagram of the components of an off-gas treatment unit portion of the synthesis gas decarbonization system of FIG. 1 according to one example configuration.
FIG. 3 is a schematic diagram illustrating an off-gas treatment unit in more detail according to one example configuration.
FIG. 4 is a flowchart describing a method of decarbonizing a synthesis gas stream according to one example.

### Detailed Description

Certain aspects and examples of the present disclosure relate to a system and method for decarbonizing a hydrocarbon gas stream, such as a synthesis gas stream, produced by a reforming reaction of a hydrocarbon feedstock in one or more heated reactors of a hydrocarbon gas generation system. The method can include purifying a partially decarbonized hydrocarbon gas stream that is received from an upstream first carbon dioxide removal unit associated with the hydrocarbon gas generation system, to produce a purified hydrocarbon gas stream and an off-gas stream. The off-gas stream can be treated at a downstream off-gas treatment unit to produce a treated off-gas stream. Treating the off-gas stream by the off-gas treatment unit can comprise converting carbon monoxide in the off-gas stream to carbon dioxide via a shift reaction, and subsequently removing carbon dioxide from the off-gas stream using a second carbon dioxide removal unit. A treated off-gas stream from the off-gas treatment unit can be used as a fuel gas for the one or more heated reactors of the upstream hydrocarbon gas generation system, or as a fuel source for one or more fired heaters or furnaces that may be used to preheat the fuel gas supplied to the one or more heated reactors. In at least some implementations, the use of the techniques of the present disclosure can result in a significant decrease in the amount of carbon dioxide emitted during the production of hydrocarbon gases and products of such hydrocarbon gases.

In some non-limiting examples, the hydrocarbon gas may be generated using a steam methane reforming process, an autothermal reforming process, or a partial oxidation process (e.g., a gasification process). When the hydrocarbon gas generation process is a reforming process, one or more heated reactors in the form of one or more reformers may be configured to generate a hydrocarbon gas from a stream of the hydrocarbon feedstock. In some reforming process examples, a primary reformer and a secondary reformer may be used. When the hydrocarbon gas generation process is an oxidation process, for example, one or more furnaces may be configured to generate a hydrocarbon gas from a stream of the hydrocarbon feedstock.

One or more shift reactors may be associated with the hydrocarbon gas generation system and located downstream of the heated reactor portion of the hydrocarbon gas generation system. A hydrocarbon gas stream from the heated reactor portion of the hydrocarbon gas generation system can be directed to the or more shift reactors, where the gas stream can be cooled and some or a majority of the carbon monoxide present in the hydrocarbon gas stream can be converted to carbon dioxide.

A primary carbon recovery system may be associated with the hydrocarbon gas generation system and located downstream of the one or more shift reactors to receive and treat a mixed hydrocarbon gas stream output by the one or more shift reactors. The primary carbon recovery system may include a (first) carbon dioxide removal unit that can be used to remove carbon dioxide from the hydrocarbon gas stream discharged from the hydrocarbon gas generation system. The first carbon dioxide removal unit may utilize different carbon dioxide removal techniques in different examples. In one example, the first carbon dioxide removal unit may utilize a solvent-based carbon dioxide removal technique. For example, the mixed hydrocarbon gas stream may be passed through an absorption column containing an amine solvent, which can strip carbon dioxide from the mixed hydrocarbon gas stream to produce a partially decarbonized hydrocarbon gas stream. The carbon dioxide containing solvent can then be heated in a desorber column to regenerate the solvent by releasing the carbon dioxide therefrom. The released carbon dioxide can be captured for subsequent sequestration or use.

The partially decarbonized hydrocarbon gas stream may subsequently be directed to a purification unit in which a purified hydrocarbon gas can be produced by separating an off-gas from the partially decarbonized hydrocarbon gas stream. A resulting purified hydrocarbon gas stream and an off-gas stream may be discharged from the purification unit. The purified hydrocarbon gas stream may comprise substantially pure (e.g., 99.99%) hydrogen, while the off-gas stream may comprise some amount of hydrogen plus impurities such as carbon monoxide and carbon dioxide. In some examples, the purification unit may employ a pressure swing adsorption (PSA) process to produce the purified hydrocarbon gas stream and the off-gas stream from the partially decarbonized hydrocarbon gas stream. In other examples, a different technique may be used to produce the purified hydrocarbon gas stream and the off-gas stream from the partially decarbonized hydrocarbon gas stream. For example, and without limitation, the purification unit may utilize a cryogenic washing technique in other examples.

The off-gas stream may be discharged from the purification unit to the downstream off-gas treatment unit, where the off-gas stream can be treated to produce a treated off-gas stream. To produce the treated off-gas stream at the off-gas treatment unit, the off-gas stream can initially be subjected to a shift reaction, whereby carbon monoxide present in the off-gas stream can be converted to carbon dioxide. At least some of the carbon dioxide present in the off-gas stream after the shift reaction can then be removed using a (second) carbon dioxide removal unit, which can be part of the off-gas treatment unit.

Various techniques may be used to remove carbon dioxide from the off-gas stream by the second carbon dioxide removal unit, including but not limited to, any carbon dioxide removal technique that can be employed by the first carbon dioxide removal unit. In one example, the second carbon dioxide removal unit of the off-gas treatment unit may utilize a solvent-based carbon dioxide removal technique. For example, after being subjected to the shift reaction, the hydrocarbon gas stream may be passed through an absorption column containing an amine solvent, which can strip carbon dioxide from the off-gas gas stream.

In an example where the first carbon dioxide removal unit of the primary carbon recovery system and the second carbon dioxide removal unit of the off-gas treatment unit both utilize the same solvent for carbon dioxide removal, the second carbon dioxide removal unit may be placed in a solvent circulation loop with the first carbon dioxide removal unit. By way of the solvent circulation loop, solvent (e.g., amine) may be sent from the first carbon dioxide removal unit to the second carbon dioxide removal unit for use in removing carbon dioxide from the off-gas stream, and carbon dioxide containing (used) solvent may be sent from the second carbon dioxide removal unit to the first carbon dioxide removal unit for regeneration of the solvent. For example, the used solvent from the second carbon dioxide removal unit may be routed to a desorber of the primary carbon recovery system where carbon dioxide can be removed from the solvent via heating and the removed carbon dioxide can be captured.

The treated off-gas stream discharged from the off-gas treatment unit can be used as a fuel gas for the one or more heated reactors of the hydrocarbon gas generation system. Because the off-gas has been treated in the off-gas treatment unit, the amount of impurities present therein can be significantly less than would be present in an off-gas stream emanating directly from the upstream purification unit. Thus, burning the treated off-gas discharged from the off-gas treatment unit in the one or more heated reactors may contribute significantly less to the carbon dioxide emissions of the hydrocarbon gas generation system than would a similar burning of off-gas received directly from the purification unit located upstream of the off-gas treatment unit.

In some examples, a system and method for decarbonizing a hydrocarbon gas stream according to the present disclosure may be applied to a low-carbon hydrocarbon gas generation system. In a low-carbon hydrocarbon gas generation system, approximately 70% to 80% of the total carbon dioxide produced by the hydrocarbon gas generation system through the burning of fuel gas and recovered off-gas and through a reforming reaction of a hydrocarbon feedstock may be captured by the primary carbon recovery system, while the remaining 20% to 30% of the carbon dioxide emissions may result from the carbon dioxide content of flue gases that are traditionally sent to the atmosphere.

Treating an off-gas stream resulting from a hydrocarbon gas generation process as described herein before returning the off-gas to the process as a fuel gas can increase the total amount of carbon dioxide that is removed from the hydrocarbon gas generation process. For example, it has been determined that use of an off-gas treatment unit to treat an off-gas stream according to the present disclosure may increase the overall amount of carbon dioxide that is recovered from the hydrocarbon gas generation process by approximately 10% to 12%. Therefore, the use of an off-gas treatment unit in conjunction with a primary carbon recovery system as described herein can result in the capture of approximately 90% to 92% of the total amount of carbon dioxide produced by a low-carbon hydrocarbon gas generation system.

The use of an off-gas treatment unit to treat an off-gas stream in the manner described herein is also a low capital expenditure solution. For example, use of the off-gas treatment unit and associated off-gas treatment process does not require the use of a costly off-gas recycle compressor to return the treated off-gas as a fuel to the hydrocarbon gas generation system. Use of the off-gas treatment process in conjunction with capturing produced carbon dioxide in the above-described approximate range also renders it unnecessary to increase the size of the reformer(s) or furnaces and related units to produce additional syngas for use as fuel. Additionally, in examples where the first carbon dioxide removal unit of the primary carbon recovery system and the second carbon dioxide removal unit of the off-gas treatment unit utilize a common solvent for carbon dioxide recovery, the need for a second solvent regenerator can be obviated by utilizing the regenerator (e.g., desorber) of the primary carbon dioxide removal unit to regenerate the solvent used by both carbon dioxide removal units.

An off-gas treatment unit according to the present disclosure can be supplied as part of a new hydrocarbon gas generation system or may be retrofit to an existing hydrocarbon gas generation system that includes existing carbon dioxide removal and hydrocarbon purification capabilities. In an example where a sufficient amount of treated off-gas can be produced using an off-gas treatment unit of the present disclosure, it may be possible to substitute the treated off-gas for the natural gas or hydrocarbons used as a fuel source for the hydrocarbon gas generation system.

Illustrative examples follow and are given to introduce the reader to the general subject matter discussed herein rather than to limit the scope of the disclosed concepts. The following sections describe various additional features and examples with reference to the drawings in which like numerals indicate like elements, and directional descriptions are used to describe the illustrative aspects, but, like the illustrative aspects, should not be used to limit the present disclosure.

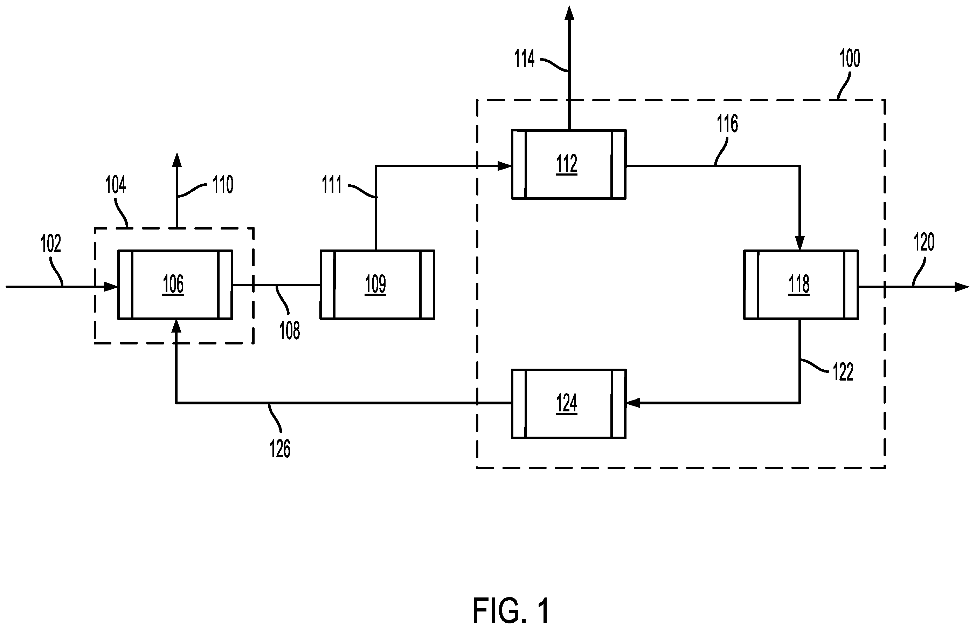

FIG. 1 is a block diagram illustrating one example configuration of a hydrocarbon gas decarbonization system 100 that incorporates an off-gas treatment unit 122 as described above. In this example, and as hereafter described for purposes of illustration, the hydrocarbon gas decarbonization system is a synthesis gas decarbonization system 100 and the associated decarbonizing process examples are directed specifically to decarbonizing a synthesis gas. It should be realized, however, that systems and methods according to the present disclosure can also be used to decarbonize hydrocarbon gases other than synthesis gases.

As shown in FIG. 1, a hydrocarbon feed stream 102 may be directed to a synthesis gas generation system 104, which may include one or more furnaces (e.g., partial oxidation reactors) or one or more heated reformers 106. In examples where the synthesis gas generation system generates synthesis gas through a reforming process, the one or more reformers 106 may be one or more steam methane reformers, one or more autothermal reformers, or some combination thereof.

In this example, the hydrocarbon feed stream 102 is natural gas, but the hydrocarbon feed stream 102 may instead be another hydrocarbon such as a biogas, a liquefied petroleum gas, naphtha, or a carbon-rich off gas in other system examples. In some examples, the hydrocarbon feed stream 102 may be preheated prior to directing the hydrocarbon feed stream 102 to the reformer(s) 106. Likewise, the hydrocarbon feed stream 102 may be pretreated prior to directing the hydrocarbon feed stream 102 to the reformer(s) 106, such as through a hydrogenation, desulfurization, or dechlorination process, and may also be mixed with steam. Once in the heated reformer(s) 106, the hydrocarbon feed stream 102 may undergo a reforming reaction via contact with a catalyst, which converts the hydrocarbon feed stream 102 into a synthesis gas that may also include other byproducts of the reforming reaction. A synthesis gas stream 108 can be discharged from the reformer(s) 106 for additional downstream processing. At least some carbon dioxide 110 present in combustion flue gases generated at the reformer(s) 106 may be emitted to the atmosphere and may contribute to the overall carbon dioxide emissions of the synthesis gas generation system 104, or the combustion flue gases could be subjected to an additional carbon capture process(es) in other system configuration examples.

The additional downstream processing of the synthesis gas stream 108 can include, for example, preparing the synthesis gas stream 108 for carbon dioxide removal by initially directing the synthesis gas stream 108 to a shift reaction before recovering carbon dioxide in a primary carbon recovery operation. For example, the synthesis gas stream 108 may be passed through one or more shift reactors 109 where the synthesis gas stream 108 can be cooled and some or a majority of the carbon monoxide present in the synthesis gas stream 108 can be converted to carbon dioxide to produce a mixed synthesis gas 111 that is rich in carbon dioxide.

The mixed synthesis gas 111 can be introduced to a (first) carbon capture unit of a primary carbon recovery system 112. The first carbon capture unit can operate using one of various possible techniques for removing carbon dioxide from synthesis gas. For example, the carbon capture unit may utilize solvent-based (e.g., amine-based) absorption processes, cryogenic separation, membrane separation, or pressure swing adsorption. Carbon dioxide 114 captured by the first carbon capture unit of the primary carbon recovery system 112 may be sent to another location for further utilization or storage.

A partially decarbonized synthesis gas stream 116 may be discharged from the primary carbon recovery system 112 to a downstream purification unit 118 for further processing. The partially decarbonized synthesis gas stream 116 may contain hydrogen, as well as residual carbon dioxide, unconverted carbon monoxide, and methane, and certain inert gases. In the purification unit 118, the partially decarbonized synthesis gas stream 116 may be further treated to improve the quality of the synthesis gas. For example, the partially decarbonized synthesis gas stream 116 may be subjected to a pressure swing adsorption (PSA) process or another process via which the partially decarbonized synthesis gas stream 116 may be treated to produce a purified synthesis gas. As shown in FIG. 1, the purification unit 118 in this example separates the partially decarbonized synthesis gas stream 116 into a purified synthesis gas stream 120 and an off-gas stream 122, each of which can be discharged from the purification unit 118 to different downstream locations.

The purified synthesis gas stream 120 discharged from the purification unit 118 can comprise substantially (e.g., 99.99%) pure hydrogen and may be used in other processes, such as for example, processes to generate ammonia or methanol, or to produce various chemicals or polymers. It is possible according to some examples, to direct the off-gas stream 122 from the purification unit 118 to the synthesis gas generation system 104 for use as a fuel gas. However, because the off-gas stream 122 normally contains some amount of hydrogen plus impurities (e.g., carbon monoxide, carbon dioxide, methane) that were removed from the partially decarbonized synthesis gas stream 116 to produce the purified synthesis gas stream 120, utilizing the off-gas stream 122 discharged from the purification unit 116 as a fuel gas can result in additional carbon dioxide emissions from the synthesis gas generation system 104. For example, burning of the off-gas stream 122 in the form discharged from the purification unit 116 can increase the total amount of carbon dioxide produced by the synthesis gas generation system 104 by about 10% to 20% in some cases, which is similar to what would occur if natural gas is used as an additional fuel gas instead of the off-gas stream 122.

To avoid carbon dioxide emissions of the synthesis gas generation system 104 due to burning the impurities in the off-gas stream 122 as discharged from the purification unit 118, examples of the synthesis gas decarbonization system 100 according to the present disclosure can include an off-gas treatment unit 124 to further treat the off-gas stream 122 discharged from the purification unit 118. The off-gas treatment unit 124 may, for example, convert carbon monoxide present in the off-gas stream 122 to carbon dioxide and may subsequently remove at least some of the carbon dioxide to produce a treated off-gas stream 126. The treated off-gas stream 126 can be discharged from the off-gas treatment unit 124 and thereafter directed to the synthesis gas generation system, such as via a treated off-gas fluid pathway, where the treated off-gas stream 126 can be used as a fuel gas for the one or more reformers 106. The treated off-gas stream 126 discharged from the off-gas treatment unit 124 can contain mostly hydrogen and less residual carbon dioxide and other impurities than the off-gas stream 122 received by the off-gas treatment unit 124 from the purification unit 118. Thus, burning the treated off-gas stream 126 at the synthesis gas generation system 104 can result in little contribution (e.g., approximately 6% to 8%) to the overall carbon dioxide emissions of the synthesis gas generation system 104.

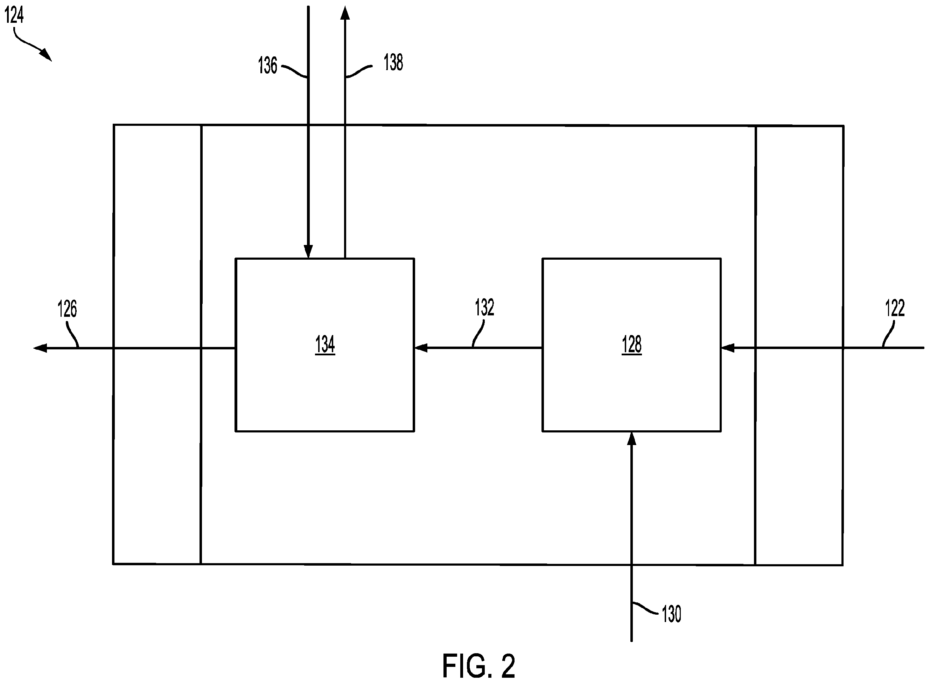

FIG. 2 is a block diagram of the components of the off-gas treatment unit 124 of the synthesis gas decarbonization system 100 of FIG. 1 according to one example. While various techniques may be used to produce the treated off-gas stream 126 at the off-gas treatment unit 124, this example of the off-gas treatment unit 124 employs a combination of a shift reaction followed by additional carbon dioxide removal to produce the treated off-gas stream 126 that can be used as a fuel gas by the synthesis gas generation system 104.

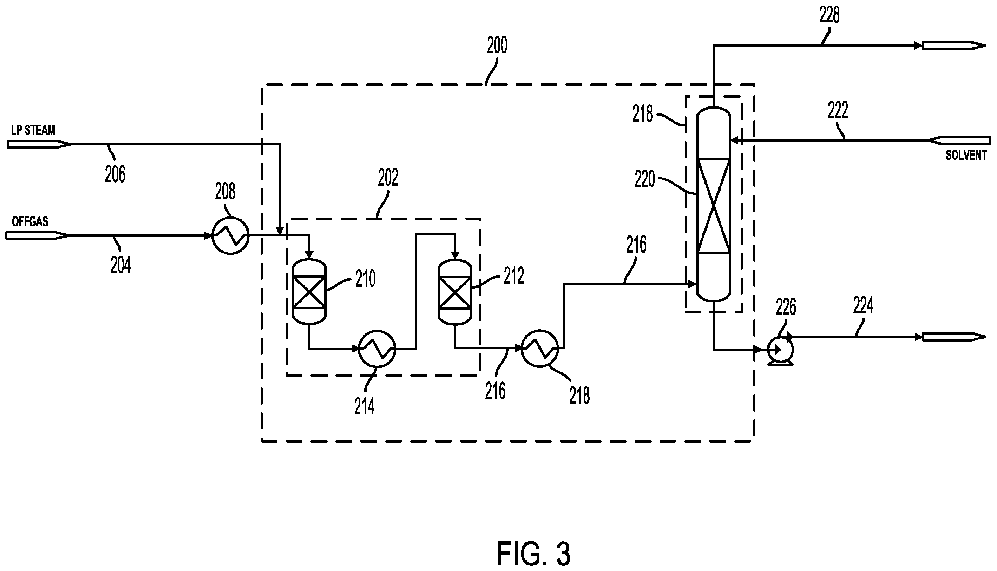

As illustrated in FIG. 2, the off-gas stream 122 discharged from the upstream purification unit 118 may be initially received at a shift unit 128 of the off-gas treatment unit 124. As described in more detail with respect to FIG. 3, the shift unit 128 may comprise one or more (e.g., two) shift reactors. A stream of steam 130 may be added to the off-gas stream 122 to promote the shift reaction of the off-gas stream 122. The shift unit 128 of the off-gas treatment unit 124 can thereafter be used to convert carbon monoxide and the steam in the off-gas stream 122 to carbon dioxide and hydrogen via a water gas shift reaction to produce a mixed off-gas stream 132 that is enriched in hydrogen and carbon dioxide and can be discharged downstream from the shift unit 128 as shown. In some examples, the cooling duty of the shift unit 128 may be recovered and used, for example, to preheat a hydrocarbon feed or a shift reactor feed, to heat boiler feed water or demineralized water, to heat reboilers, to generate steam, etc. In some examples, it may be possible to utilize the condensate associated with removal of excess steam to, for example, generate at least a portion of the steam used in a steam reforming process or the water-shift reaction, to drive downstream compressors, or for other purposes.

To remove carbon dioxide from the mixed off-gas stream 132, the off-gas treatment unit 124 may be further equipped with a (second) carbon dioxide removal unit 134. One or more types of carbon dioxide removal technology may be used by the second carbon dioxide removal unit 134 for this purpose. For example, one or a combination of solvent-based (e.g., amine-based) absorption, pressure swing adsorption, vacuum adsorption, cryogenic, or membrane-based carbon dioxide removal technologies may be utilized. In the particular example depicted in FIG. 2, the mixed off-gas stream 132 can be passed through an absorption column containing a solvent, which can strip carbon dioxide from the mixed off-gas stream 132.

In the particular example of FIG. 2, the first carbon dioxide removal unit of the primary carbon recovery system 112 utilizes the same solvent-based carbon dioxide removal technology as the second carbon dioxide removal unit 134 of the off-gas treatment unit 124. Consequently, as represented in FIG. 2, the complexity and cost of the off-gas treatment unit 124 can be reduced by using the solvent regeneration component(s) and capacity of the primary carbon recovery system 112 to regenerate the solvent used by the second carbon dioxide removal unit 134 of the off-gas treatment unit 124. For example, a solvent circulation loop may be created between the second carbon dioxide removal unit 134 of the off-gas treatment unit 124 and a solvent regenerator of the primary carbon recovery system 112. By way of the solvent circulation loop, a stream of solvent (e.g., amine) 136 may be sent from the first carbon dioxide removal unit of the primary carbon dioxide removal unit 112 to the second carbon dioxide removal unit 134 of the off-gas treatment unit 124 for use in removing carbon dioxide from the mixed off-gas stream 132. Likewise, a carbon dioxide containing (used) stream of the solvent 138 may be sent from the second carbon dioxide removal unit 134 of the off-gas treatment unit 124 to a solvent generation system (e.g., solvent regenerator or solvent flash vessel) of the primary carbon dioxide removal unit 112 for regeneration of the solvent. For example, the stream of solvent 138 from the second carbon dioxide removal unit 134 may be sent to a desorber of the primary carbon dioxide removal unit 112. At the desorber, carbon dioxide removed from the mixed off-gas stream 132 in the off-gas treatment unit 124 can be removed from the solvent via heating or flashing and the removed carbon dioxide can be captured.

FIG. 3 is a schematic diagram illustrating an off-gas treatment unit 200 in more detail according to one example configuration. In some examples, the off-gas treatment unit 124 of FIGS. 1-2 may incorporate the configuration of the off-gas treatment unit 200 of FIG. 3. In this example, the off-gas treatment unit 200 includes a shift unit 202 that receives an off-gas stream 204 and a steam feed 206 in the same or a similar manner to the off-gas treatment unit 124 of FIG. 1-2. As shown, the off-gas stream 204 may be heated (e.g., to at least 300 °C) prior to entering the shift unit 202, such as by a shift preheater 208.

In this example, the shift unit 202 of the off-gas treatment unit 200 may include a pair of shift reactors 210, 212 for converting carbon monoxide present in the off-gas stream 204 to carbon dioxide and water. For example, a first (e.g., high temperature) shift reactor 210 may receive the off-gas stream 204 and the steam 206 and may convert at least part of the carbon monoxide present in the off-gas stream 204 to carbon dioxide and water via an exothermic water-gas shift reaction. The off-gas stream 204 discharged from the first shift reactor 210 may be directed to a downstream second (e.g., medium temperature) shift reactor 212 where additional carbon monoxide may be converted to carbon dioxide and to hydrogen. As a result of the shift reaction operation by the shift reactors 210, 212 of the shift unit 202, a mixed off-gas stream 216 enriched in hydrogen and carbon dioxide may be discharged from the shift unit 202 at a temperature that is less than the temperature of the off-gas stream 204 at the entrance to or the exit of the first shift reactor 210. For example, the off-gas stream 204 may exit the first shift reactor 210 at a temperature of between approximately 350 °C to 450 °C, while the mixed off-gas stream 216 may exit the second shift reactor 212 at a temperature of approximately 200 °C to 350 °C.

In some examples, a heat recovery device 214 may be used to recover residual heat from the off-gas stream 204. For example, heat may be recovered from the off-gas stream 204 after the off-gas stream 204 exits the first shift reactor 210 but before the off-gas stream 204 enters the second shift reactor 212. As described above, the recovered heat (i.e., the cooling duty of the shift unit 202) may be used, for example, to preheat a hydrocarbon feed or a reformer feed, to heat boiler feed water or demineralized water, to heat reboilers, to generate steam, etc.

The mixed off-gas stream 216 discharged from the shift unit 202 can be introduced to a (second) carbon dioxide removal unit 218 of the off-gas treatment unit 200. In some examples, the mixed off-gas stream 216 may be cooled by a cooling device 220 prior to entering the second carbon dioxide removal unit 218. For example, the mixed off-gas stream 216 may be cooled to a temperature of less than 80 °C prior to entering the second carbon dioxide removal unit 218. The second carbon dioxide removal unit 218 may operate in conjunction with a (first) carbon dioxide removal unit of an upstream primary carbon recovery system, such as the primary carbon recovery system 112 of FIG. 1. The second carbon dioxide removal unit 218 can operate using any of the various possible carbon dioxide removal techniques described above, or any other technique by which carbon can be removed from a synthesis gas. For example, the second carbon dioxide removal unit 218 may utilize solvent-based (e.g., amine-based) absorption processes, cryogenic separation, membrane separation, or pressure or vacuum swing adsorption techniques.

In this example, the second carbon dioxide removal unit 218 employs a solvent-based carbon dioxide removal technique and is shown to include an absorption column 220 for that purpose. When the first carbon dioxide removal unit of the upstream primary carbon recovery system also employs a like solvent-based carbon dioxide removal technique, a solvent circulation loop may be established between the first carbon dioxide removal unit and the second carbon dioxide removal unit 218 of the off-gas treatment unit 200 as described above relative to the off-gas treatment unit 122 of FIG. 2. In such an example, the second carbon dioxide removal unit 218 may receive a supply stream of solvent 222 (e.g., amine) from a solvent regenerator of the upstream primary carbon recovery system and may return a used (carbon dioxide rich) solvent stream 224 to the solvent regenerator of the primary carbon recovery system for regeneration of the solvent. In this manner, a separate solvent regenerator is not necessary for the off-gas treatment unit 200, which can reduce the size, complexity, and cost of the off-gas treatment unit 200. In some examples, a pump 226 or a similar device may be provided to facilitate return of the used solvent stream 224 from the second carbon dioxide removal unit 218 to the primary carbon recovery system.

A treated off-gas stream 228 may be discharged from the second carbon dioxide removal unit 218. In a like manner to that described above relative to the synthesis gas decarbonization system 100 of FIG. 1 and the off-gas treatment unit 122 shown in FIG. 1 and FIG. 2, the treated off-gas stream 228 discharged from the second carbon dioxide removal unit 218 can be directed an upstream synthesis gas generation system for use as a fuel gas by one or more heated reactors or furnaces thereof. Because the treated off-gas stream 228 is comprised mostly of hydrogen after having been substantially divested of contaminants (e.g., carbon dioxide) by treatment in the off-gas treatment unit 200, burning of the treated off-gas stream 228 in the one or more heated reactors of the synthesis gas generation system may be performed with minimal (e.g., approximately 6% to 8%) contribution to the overall carbon dioxide emissions of the synthesis gas generation system.

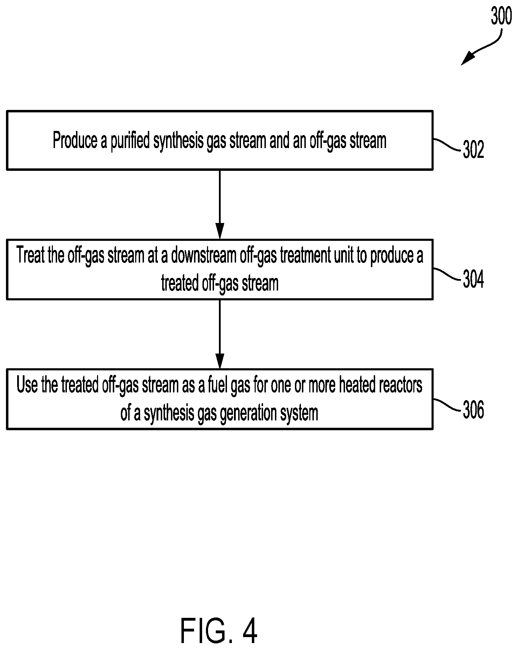

FIG. 4 is a flowchart 300 describing a method of decarbonizing a synthesis gas stream according to one example. As indicated in block 302, a purified synthesis gas stream and an off-gas stream can be produced by purifying a partially decarbonized synthesis gas stream received from an upstream first carbon dioxide removal unit. In some examples, the synthesis gas stream may be generated by a synthesis gas generation system, such as by a reforming reaction of a hydrocarbon feedstock in one or more heated reactors. The first carbon dioxide removal unit may be a component of a primary carbon recovery system that can be associated with the synthesis gas generation system. In some examples, the primary carbon recovery system may subject the generated synthesis gas stream to a shift reaction followed by a carbon dioxide removal operation. At least some of the carbon monoxide in the synthesis gas stream can thus be converted to carbon dioxide, and most (i.e., more than 99%) of the carbon dioxide can thereafter be removed from the synthesis gas stream to produce a partially decarbonized synthesis gas stream.

In some examples, the purified synthesis gas stream and the off-gas stream can be produced by directing the partially decarbonized synthesis gas stream from the primary carbon recovery system to a downstream purification unit. At the downstream purification unit, the quality of the partially decarbonized synthesis gas stream may be further improved, such as for example, by subjecting the partially decarbonized synthesis gas to a pressure swing adsorption (PSA) process or to another treatment process.

As indicated in block 304, the off-gas stream can be treated at a downstream off-gas treatment unit to produce a treated off-gas stream. Treating the off-gas stream by the off-gas treatment unit can include converting carbon monoxide in the off-gas stream to carbon dioxide via a shift reaction, and subsequently removing carbon dioxide from the off-gas stream using a second carbon dioxide removal unit. In some examples, the shift reaction can be performed on the off-gas stream by one or more shift reactors of a shift unit of the off-gas treatment unit. For example, the shift reaction may be performed by a cooperating pair of shift reactors. The shift reaction may produce a mixed off-gas stream that can be discharged to a downstream (second) carbon dioxide removal unit of the off-gas treatment unit. One or more types of carbon dioxide removal technology may be used by the second carbon dioxide removal unit, including but not limited to a solvent-based (e.g., amine-based) absorption carbon dioxide removal process. In some examples, the first carbon dioxide removal unit of the primary carbon recovery system and the second carbon dioxide removal unit of the off-gas treatment unit can utilize the same solvent-based carbon capture technology. In such a case, solvent may be provided to the second carbon dioxide removal unit from the first carbon dioxide removal unit, and used solvent from the second carbon dioxide removal unit can be sent to the primary carbon recovery system to regenerate the solvent.

As indicated in block 306, the treated off-gas stream can be used as a fuel gas for one or more heated reactors (or fired heaters/furnaces) of the synthesis gas generation system located upstream of the primary carbon recovery system. Burning of the treated off-gas can produce heat for the reforming reactions used by the synthesis gas generation system with a minimal resulting increase in the overall carbon dioxide emissions of the synthesis gas generation system. In an example where a sufficient amount of treated off-gas can be produced, it may be possible to utilize the treated off-gas as the sole fuel source for the synthesis gas generation system.

In some examples, an off-gas treatment unit as described herein may be incorporated into a new synthesis gas generation system or a synthesis gas decarbonization system associated therewith. In other examples, an off-gas treatment unit as described herein may retrofit to an existing synthesis gas generation system or an existing synthesis gas decarbonization system associated therewith. For example, off-gas treatment units as described herein can be installed to an existing synthesis gas generation system and can be used in conjunction with a primary carbon recovery system and purification unit thereof to remove impurities from a generated off-gas before the off-gas is supplied to and burned in the synthesis gas generation system. Retrofitting a synthesis gas generation system or associated decarbonization system by adding an off-gas treatment unit as described herein can be a very effective method of further decarbonizing an existing synthesis gas generation system.

The foregoing description of certain examples, including illustrated examples, has been presented only for the purpose of illustration and description and is not intended to be exhaustive or to limit the disclosure to the precise forms disclosed. Modifications, adaptations, and other uses may be possible without departing from the scope of the disclosure.

## Claims

1. A method comprising:
producing a purified hydrocarbon gas stream and an off-gas stream by purifying a partially decarbonized hydrocarbon gas stream received from an upstream first carbon dioxide removal unit;
treating the off-gas stream at a downstream off-gas treatment unit to produce a treated off-gas stream, where treating the off-gas stream by the off-gas treatment unit comprises converting carbon monoxide in the off-gas stream to carbon dioxide via a shift reaction, and subsequently removing carbon dioxide from the off-gas stream using a second carbon dioxide removal unit; and
using the treated off-gas stream as a fuel gas for one or more heated reactors, furnaces, or heaters located upstream of the first carbon dioxide removal unit.

2. The method of claim 1, wherein the hydrocarbon gas stream is a synthesis gas stream comprising carbon monoxide, carbon dioxide, and hydrogen and is generated by a reforming reaction of a hydrocarbon in the one or more heated reactors or furnaces.

3. The method of claim 1, wherein the second carbon dioxide removal unit removes carbon dioxide from the off-gas stream through at least one of solvent-based absorption, cryogenic separation, membrane separation, and pressure swing adsorption.

4. The method of claim 1, wherein the second carbon dioxide removal unit:
receives solvent from a solvent regeneration system associated with the first carbon dioxide removal unit and uses the solvent to remove carbon dioxide from the off-gas stream; and
returns used solvent to the solvent regeneration system for regeneration of the solvent;
optionally wherein the solvent is amine and the carbon dioxide is removed from the off-gas stream by the second carbon dioxide removal unit by contacting the off-gas stream with the amine in an absorption column.

5. The method of claim 1, wherein the off-gas treatment unit is retrofit to a hydrocarbon gas generation system having an existing primary carbon dioxide recovery system that includes the first carbon dioxide removal unit and a hydrocarbon gas purification unit that cooperates with the first carbon dioxide removal unit to produce the purified hydrocarbon gas stream and the off-gas stream.

6. The method of claim 1, wherein using the treated off-gas as a fuel gas in the one or more heated reactors, furnaces, or heaters reduces carbon dioxide emissions from the one or more heated reactors, furnaces, or heaters by approximately 10% to 12% in comparison to a case where the off-gas is used as a fuel gas in the one or more heated reactors, furnaces, or heaters without first being treated at the off-gas treatment unit.

7. A system comprising:
a hydrocarbon gas purification unit arranged to receive a partially decarbonized hydrocarbon gas stream from an upstream first carbon dioxide removal unit and to produce a purified hydrocarbon gas stream and an off-gas stream therefrom;
an off-gas treatment unit arranged downstream of the hydrocarbon gas purification unit to receive the off-gas stream and to produce a treated off-gas stream by converting carbon monoxide in the off-gas stream to carbon dioxide using one or more shift reactors and removing carbon dioxide from the off-gas stream using a second carbon dioxide removal unit; and
a fluid pathway between the off-gas treatment unit and one or more heated reactors, furnaces, or heaters located upstream of the first carbon dioxide removal unit by which the treated off-gas stream is suppliable as a fuel gas to the one or more heated reactors, furnaces, or heaters.

8. The system of claim 7, wherein the hydrocarbon gas stream is a synthesis gas stream comprising carbon monoxide, carbon dioxide, and hydrogen and is generated by a reforming reaction of a hydrocarbon in the one or more heated reactors or furnaces.

9. The system of claim 7, wherein the one or more shift reactors is a first shift reactor and a second shift reactor that are cooperatively operable to convert carbon monoxide in the off-gas stream to carbon dioxide.

10. The system of claim 7, wherein the second carbon dioxide removal unit comprises at least one of a solvent-based absorption component, a cryogenic separation component, a membrane separation component, and a pressure swing adsorption component.

11. The system of claim 7, wherein the first carbon dioxide removal unit and the second carbon dioxide removal unit each utilize a solvent-based carbon dioxide removal technique;
optionally wherein the second carbon dioxide removal unit is arranged to:
receive the solvent from a solvent regeneration system associated with the first carbon dioxide removal unit and to use the solvent to remove carbon dioxide from the off-gas stream; and
return used solvent to the solvent regeneration system for regeneration of the solvent;
optionally wherein the system further comprises a solvent pump in a solvent return pathway between the second carbon dioxide removal unit and the solvent regeneration system.

12. A method of retrofitting an existing hydrocarbon gas generation system having a primary carbon recovery system that includes a first carbon dioxide removal unit and a hydrocarbon gas purification unit that cooperate to produce at least an off-gas stream, the method comprising:
installing an off-gas treatment unit downstream of the hydrocarbon gas purification unit;
treating the off-gas stream at the off-gas treatment unit to produce a treated off-gas stream, where treating the off-gas stream by the off-gas treatment unit comprises converting carbon monoxide in the off-gas stream to carbon dioxide via a shift reaction, and subsequently removing carbon dioxide from the off-gas stream using a second carbon dioxide removal unit; and
using the treated off-gas stream as a fuel gas for one or more heated reactors, furnaces, or heaters of the hydrocarbon gas generation system.

13. The method of claim 12, wherein:
i) the hydrocarbon gas stream is a synthesis gas stream comprising carbon monoxide, carbon dioxide, and hydrogen and is generated by a reforming reaction of a hydrocarbon in the one or more heated reactors or furnaces; or
ii) the second carbon dioxide removal unit removes carbon dioxide from the off-gas stream through at least one of a solvent-based absorption component, a cryogenic separation component, a membrane separation component, and a pressure swing adsorption component.

14. The method of claim 12, wherein the second carbon dioxide removal unit:
receives solvent from a solvent regeneration system associated with the first carbon dioxide removal unit and uses the solvent to remove carbon dioxide from the off-gas stream; and
returns used solvent to the solvent regeneration system for regeneration of the solvent;
optionally wherein the solvent is amine and the carbon dioxide is removed from the off-gas stream by the second carbon dioxide removal unit by contacting the off-gas stream with the amine in an absorption column.

15. The method of claim 12, wherein using the treated off-gas as a fuel gas in the one or more heated reactors, furnaces, or heaters reduces carbon dioxide emissions from the one or more heated reactors, furnaces, or heaters by approximately 10% to 12% in comparison to a case where the off-gas is used as a fuel gas in the one or more heated reactors, furnaces, or heaters without first being treated at the off-gas treatment unit.
